Europäisches Patentamt

(19) European Patent Office

Office européen des brevets

(11) Publication number: **0 139 038**
**B1**

(12) **EUROPEAN PATENT SPECIFICATION**

(45) Date of publication of patent specification: **27.04.88**

(21) Application number: **83110583.8**

(22) Date of filing: **22.10.83**

(51) Int. Cl.⁴: **B 65 G 67/02**

(54) **Releasable locking device.**

(43) Date of publication of application:
**02.05.85 Bulletin 85/18**

(45) Publication of the grant of the patent:
**27.04.88 Bulletin 88/17**

(84) Designated Contracting States:
**DE FR GB**

(56) References cited:
**EP-A-0 012 386**
**EP-A-0 025 266**
**EP-A-0 064 327**
**US-A-2 669 314**
**US-A-4 110 860**

(73) Proprietor: **ABON CORPORATION**
**9019 N. Deerwood Drive**
**Milwaukee, WI 53223 (US)**

(72) Inventor: **Hahn, Norbert**
**3882 E. Birchwood**
**Cudahy Wisc. 53110 (US)**
Inventor: **Hipp, Steven J.**
**6013 S. 6th Street**
**Milwaukee Wisconsin 53221 (US)**
Inventor: **Swessel, Michael A.**
**3841 E. Underwood**
**Cudahy Wisconsin 53110 (US)**

(74) Representative: **Hoeger, Stellrecht & Partner**
**Uhlandstrasse 14c**
**D-7000 Stuttgart 1 (DE)**

## Description

The invention relates to a releasable locking device for securing a parked vehicle to an adjacent structure according to the preamble of patent claim 1.

An apparatus of this type is known from EP—A—0 064 327.

In comparison with this prior art, the object of the invention is to improve an apparatus of the type in question such that it retains a compact construction, is suitable for use with a large number of different vehicles and may still be readily manipulated by a person safely located out of the way of the vehicle being parked, essential parts of the apparatus hereby being covered to prevent damage.

This object is accomplished by the features specified in the characterizing clause of patent claim 1.

For a more complete understanding .of the invention reference should be made to the drawings, wherein:

Fig. 1 is a fragmentary perspective front view of one form of the improved locking device shown mounted on the front wall of a loading dock and with no vehicle shown parked adjacent thereto; for purposes of illustration and better understanding of the device, the carriage second section is shown in its normal elevated position with the hooklike member in an inoperative mode, and with the lift unit being engaged by one end of a rodlike implement so as to enable the hooklike member to be manually moved to its operative mode.

Fig. 2 is similar to Fig. 1 but showing the lift unit manually pulled upwardly the full amount by the rodlike implement and showing the hooklike member disposed in an operative mode.

Fig. 3 is an enlarged fragmentary perspective side view with the hooklike member in its operative mode and the rodlike implement engaging a release mechanism carried on the carriage second section.

Fig. 4 is similar to Fig. 3 but showing the release mechanism being activated upwardly by the rodlike implement whereby the hooklike member has assumed its inoperative mode.

Fig. 5 is an enlarged fragmentary front elevational view of the device of Fig. 4 and with a portion of the hooklike member removed.

Fig. 6 is an enlarged fragmentary left side elevational view of Fig. 5.

Fig. 7 is a fragmentary perspective front view of the carriage second section disassembled from the carriage first section.

Fig. 8 is an enlarged fragmentary perspective bottom view of the hooklike member, a portion of the lock unit and a segment of the lift unit.

Fig. 9 is an enlarged fragmentary left-hand view of the hooklike member and lift unit shown in Fig. 8.

Fig. 10 is an enlarged fragmentary perspective left side view of the carriage second section *per se* with a protective housing therefor removed so as to expose various components of the release mechanism.

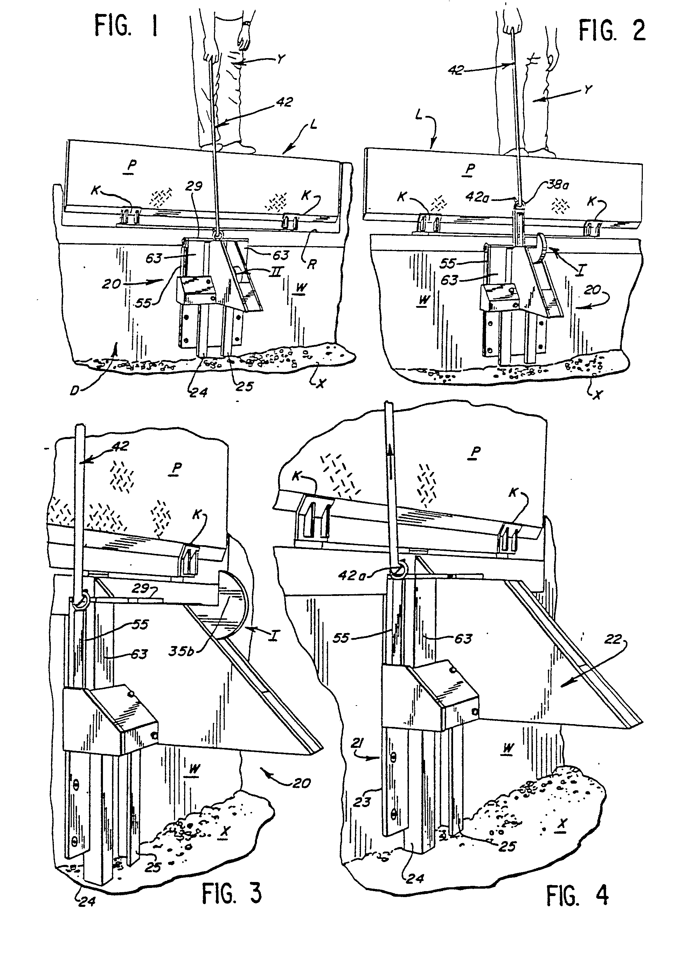

Referring now to the drawings and more particularly to Figs. 1—4, one embodiment of the improved releasable locking device 20 is shown mounted on the front wall W of a conventional loading dock D. The dock, as shown, is provided with a dock leveler L which may be of a type disclosed in U.S. patent No. 4,110,860. The dock leveler is normally disposed within a pit or recess R formed in the dock with the front side of the pit terminating at the front wall of the dock. As seen in Figs. 1—4, the dock leveler includes a lip P which is hingedly mounted on the front edge of a deck, not shown, the latter forming a component of the dock leveler. The lip P is adapted to assume an extended position wherein it spans the gap which normally occurs between the rear end of the parked vehicle, not shown, and the front edge of the deck during the loading or unloading operation. When the dock leveler is in an inoperative mode, the exposed surface of the deck is substantially coplanar with the horizontal supporting surface of the dock, and the lip P assumes a downwardly extending vertical inoperative position as shown. The lower edge of the depending lip is accommodated and supported by a plurality of horizontally spaced keepers K which are fixedly mounted adjacent the front wall W of the dock. The dock leveler construction, heretofore described, forms no part of the instant invention. The improved releasable locking device 20 may, if desired, be mounted on the front wall of a dock wherein no dock leveler is provided.

The device 20 is positioned between the leveler L and the roadway X on which the vehicle is parked and includes a fixedly mounted carriage first section 21 and a carriage second section 22 mounted on the first section for substantially vertical adjustment relative thereto.

The carriage first section 21 in the illustrated embodiment includes an elongated substantially planar mounting plate 23 which is bolted or otherwise affixed to the front wall W of the dock D. As shown, the plate 23 is disposed beneath the pit R and substantially equidistant from the side walls thereof. The lower edge of plate 23 may engage or be closely adjacent to the roadway X.

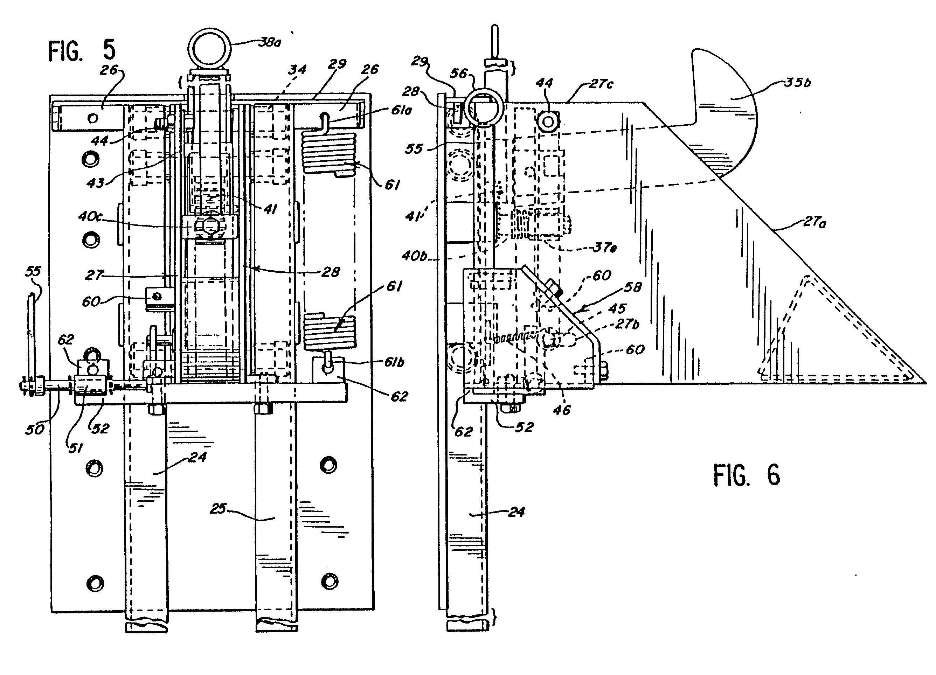

Mounted on the exposed surface of the mounting plate 23 are a pair of spaced, parallel, vertically extending guideways 24, 25, see Figs. 3, 4. Affixed to the upper ends of the guideways 24, 25 and projecting laterally in opposite directions therefrom is a bracket 26, see Fig. 5. The function of the bracket will be described more fully hereinafter. In addition to bracket 26, the upper ends of the guideways are closed by a fixedly mounted flange piece 29.

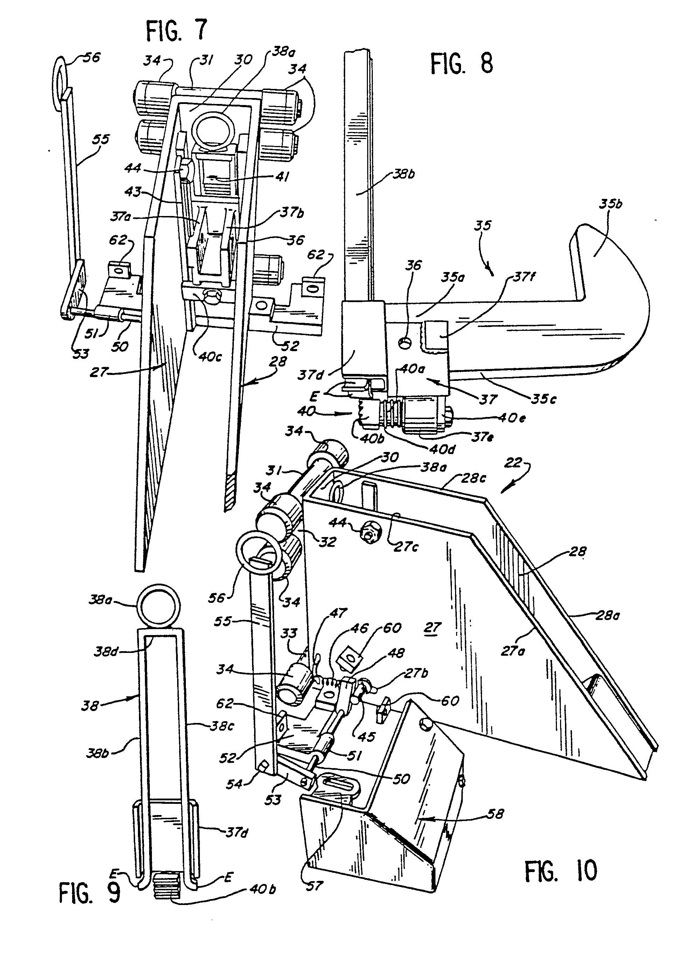

The carriage second section 22 is shown more clearly in Fig. 10 and includes a pair of outwardly projecting, substantially parallel, vertically extending plate members 27, 28. The corresponding edges of the plate members, adjacent the carriage first section 21, are interconnected by a bail or web portion 30.

Affixed to the web portion 30 and arranged in vertically spaced relation are a plurality of laterally extending guides 31, 32, 33. The outer ends of each guide are provided with suitable rollers 34 or the like which are accommodated within and engage the guideways 24, 25 of the carriage first section 21. The relative positions of the guides 31—33 maintain the second section 22 in a stable condition as it moves vertically relative to the first section 21, as will be discussed more fully hereinafter.

Positioned between the plate members 27, 28 is a hooklike member 35, see Fig. 8, which is movable relative thereto between an operative vehicle-locking mode I, Figs. 2, 3 and an inoperative vehicle-release mode II, Figs. 1, 4. When in the inoperative vehicle-release mode II, Figs. 1, 4. When in the inoperative mode the hooklike member 35 is substantially concealed between the plate members 27, 28. Member 35 has the inner end 35a thereof connected by a shear pin 36 to a slide piece 37, see Fig. 8. The outer distal end 35b of member 35 extends upwardly at approximately ninety degrees and is adapted to engage behind the crosspiece of a conventional ICC bar, not shown, of the parked vehicle. Such a bar is required by most governmental regulation and depends from the rear end of the bed of the parked vehicle. When engaged by member 35, the crosspiece of the ICC bar is captured between the distal end 35b and the front wall W of the dock D thereby preventing the parked vehicle from accidentally moving away from the dock before the loading or unloading operation is completed.

Because the height of the ICC bar crosspiece above the roadway X oftentimes varies several inches, it is necessary that the height of the hooklike member must also vary when in its operative mode I so that the member 35 will securely engage the crosspiece. To permit the necessary height variations of member 35, when it is in the operative mode I and thus, compensate for the height differences of the crosspiece, the carriage second section 22 is capable of being moved in a verical plane relative to the fixed carriage first section 21.

To enable the second section 22 to be moved the appropriate amount, the corresponding upper, outer edge portions 27a, 28a of the plate member 27, 28 are inclined downwardly a like amount forming a cam surface, see Figs. 1—4, 10 so that when the vehicle is being maneuvered into the appropriate parked position, the crosspiece of the ICC bar will engage edge portions 27a, 28a forcing the carriage second section 22 downwardly as the vehicle continues to back towards the dock. The vehicle will have assumed the required parked position when the back end of the vehicle bed has engaged bumpers, not shown, normally mounted on the dock wall W adjacent opposite sides of the dock leveler. The bumpers project outward from the dock wall so that the rear end of the vehicle will not damage the locking device 20, the lip P of the dock leveler L, or the dock itself. The carriage second section 22 extends outwardly beyond the bumpers so that the ICC bar crosspiece will slidably engage the inclined edges 27a, 28a and move relative thereto a sufficient amount so that the distal end 35b of the hooklike member 35 will be properly located with respect to the crosspiece.

Vertical adjustment of the carriage second section 22 is also important to compensate for variations in the weight of the load supported by the vehicle bed as the latter is subjected to loading or unloading.

The slide piece 37, to which the end 35a of the hooklike member 35 is connected, includes a pair of spaced substantially parallel, rigid flange segments 37a, 37b (see Fig. 7) between which the end 35a of member 35 is adapted to be snugly positioned when the member and slide piece are in assembled condition. The lower portions of the flange segments are interconnected by a cross segment 37c; the latter contacts the underside 35c of member end 35a and thus, maintains the hooklike member 35 in a predetermined outwardly extending position.

Affixed to the inner edges of flange segments 37a, 37b is a rearwardly facing substantially channel section 37d which functions as a substantially vertical guide for an independently adjustable, elongated lift member 38, the latter to be discussed in greater detail hereinafter.

Mounted on the underside of flange segments 37a, 37b is a depending bracket 37e on which is mounted a first jaw unit 40. The unit includes a spring biased piston 40a having a jaw 40b affixed to an exposed end of the piston. The piston projects inwardly towards the carriage first section 21. Affixed to and extending laterally from the opposite end of the piston 40a is a lug 40c, the function of which will become apparent hereinafter. The jaw 40b is provided with a serrated surface which is adapted to frictionally engage an elongated vertically extending ratchet 41. The ratchet is fixedly mounted on the outwardly facing surface of the web portion 30 which interconnects plate member 27, 28. The ratchet 41 has a complemental serrated surface and the serrations of jaw 40b are adapted to automatically interlock therewith thereby retaining the hooklike member 35 in its operative mode I. The shape of the serrations are such that the hooklike member 35 can be readily raised from the inoperative mode II to the operative mode I by an upward pulling force being manually applied to the lift member 38. To facilitate the application of the required pulling force, an elongated rodlike implement 42 may be utilized, which has a laterally extending finger 42a formed at one end thereof. The finger, as seen in Fig. 2, may be inserted through a loop or opening 38a formed at the upper end of the lift member 38.

The opposite or upper end of the implement 42 may be provided with a suitable handle so as to facilitate manipulation of the implement when engaging or disengaging the finger 42a with the lift member loop 38a.

As seen in Figs. 1 and 2, the implement 42 can be manipulated by a person Y standing on the deck of the dock leveler adjacent the hinge axis of the lip P. Because the rear end of the parked vehicle is spaced away from the dock front wall W by the bumpers, heretofore mentioned, there is sufficient spacing provided to allow the implement to be readily manipulated.

The lift member 38, as illustrated in Fig. 9, has a fork-like configuration and includes a pair of elongated substantially parallel depending leg segments 38b, 38c. The spacing between the leg segments is such that they slidably straddle the jaw 40b and are disposed between the flanges of the channel section 37d, see Fig. 9. The lower ends E of the leg segments 38b, 38c are flared outwardly in opposite directions so that when the lift member 38 is pulled upwardly a predetermined amount by implement 42, the ends E will engage the lower edges of the channel section flanges and upon a continued upward pull being exerted on the lift member 38, the hooklike member 35 and jaw unit 40 will move upwardly as a unit relative to the carriage second section 22, until the distal end 35b of the member 35 has interlockingly engaged the ICC bar crosspiece of the parked vehicle.

The upper ends of the leg segments 38b, 38c are interconnected by a cross segment 38d from which the loop 38a projects. When the loop is released from the implement 42 after the hooklike member has assumed its operative mode, the lift member 38 will automatically move downwardly (retract) by the force of gravity until the cross segment 38d engages the upper surface of jaw 40b. The channel section 37d and the jaw 40b coact with one another to provide guides for the leg segments 38b, 38c of the lift member as the latter moves relative to the hooklike member 35.

As seen in Fig. 8, the jaw 40b is biased toward the ratchet 41 by a coil spring 40d having one end thereof engaging the jaw and the opposite end engaging the bracket 37e.

In order to effect disengagement between the jaw 40b and ratchet 41, an elongated bar 43 is provided which is pivotally mounted at 44 to the interior surface of plate member 27, see Fig. 7. The bar depends from the pivot axis 44 and extends to one side of bracket 37e and behind the lug 40c, the latter being mounted on and movable with the piston 40a. A spacer pad 37f, see Figs. 7 and 8, is provided on one side of slide piece 37. The pad slidably engages an adjacent surface of bar 43, as the slide piece 37 moves as a unit with the hooklike member 35. The length of bar 43 is greater than the distance the member 35 travels when moving between its operative and inoperative modes.

Affixed to the lower end of bar 43 and extending transversely therefrom through a slot 27b, formed in plate member 27, is a pin 45, see Fig. 10. The distal end of pin 45 is exposed and has connected thereto one end of a coil spring 46. The opposite end of the spring is attached to a spur 47 affixed to and projecting from the exposed surface of plate member 27. The spring 46 exerts a pulling force on the pin 45, causing the lower end of bar 43 to be pivoted inwardly towards the channel section 37d.

Engaging the exposed end of pin 45 is an upright arm 48 which has the lower end thereof affixed to a transversely extending shaft 50. The shaft is supported by a bearing 51 provided on a bracket 52 which is affixed to and extends sidewise in both directions from the underside of plate members 27, 28, see Figs. 5, 10. The shaft 50 is supported so as to rotate about its longitudinal axis.

Keyed or otherwise affixed to the outer end of shaft 50 is one end of a lever 53. The opposite end of the lever is pivotally connected at 54 to the lower end of an upwardly extending release bar 55. The upper end of bar 55 is provided with an upwardly projecting loop or opening 56. The top of the loop 56 is normally in a position which is approximately in a plane defined by the upper edge portions 27c, 28c of plate members 27, 28, see Fig. 6.

Bar 55 slidably extends through a stirruplike guide 57 affixed to the interior of a protective cover 58 which is removably attached to a plurality of supporting brackets 60 protruding from the exposed surface of plate member 27, see Fig. 10.

When jaw 40b is to be disengaged from the ratchet 41 so as to enable the hooklike member 35 to automatically return to its inoperative vehicle-release mode II, the loop 56 of bar 55 is engaged by the finger 42a of implement 42 and an upward pull of predetermined magnitude is exerted thereon. As bar 55 moves upwardly, a clockwise turning force is imparted to shaft 50 whereupon arm 48 overcomes the bias of both springs 46 and 40d and swings the lower end of bar 43 outwardly against lug 40c causing the latter and the piston 40a and jaw 40b attached thereto to move outwardly relative to bracket 37e whereby jaw 40b becomes disengaged from the ratchet 41. Once the loop 56 is disengaged from the finger 42a of the implement 42, the bar 55 will move downwardly due to the force of gravity and the bias of springs 46, 40d.

The carriage second section 22 is biased so as to normally assume a predetermined elevated position with respect to the roadway surface X, see Figs. 1 and 2. The height of the elevated position is such that the crosspiece of the ICC bar of the vehicle, as the latter is being backed into a parked position, will slidably engage the cam surface defined by the inclined edge portions 27a, 28a of the plate members 27, 28. As the vehicle continues its backing motion, a predetermined downward force component is exerted on the cam surface causing the carriage second section 22 to move downwardly. Normally when the vehicle is in its parked position and abutting the bumpers, the ICC bar crosspiece will rest upon the upper edge portions 27c, 28c of the plate members 27, 28.

The upward bias for the carriage second section 22, in the illustrated embodiment, is provided by a pair of heavy duty coil springs 61 disposed laterally from the plate members 27, 28. The upper ends 61a of the springs 61 are connected to the opposite end portions of the laterally extending bracket 26 which is affixed to the upper ends of the guideways 24, 25 provided on the stationary carriage first section 21.

The lower ends 61b of the springs 61 are connected to upwardly extending stubs 62. The stubs 62 are carried by portions of bracket 52, which extend laterally outwardly from the underside of plate members 27, 28. The coil springs 61 are positioned adjacent to, but spaced from, the corresponding guideways, 24, 25. One of the springs 61 is positioned between the release bar 55 and the guideway 24 and rearwardly of the shaft 50. Each of the springs 61 is enclosed within an elongated protective shield 63. The shields may be affixed at their upper ends to the laterally extending portions of bracket 26. The shields extend downwardly through an open top of the cover 58.

Besides allowing the carriage second section 22 to move downwardly relative to the first section 21 so as to compensate for the variations in height of the ICC bar crosspiece on various types of vehicles, the bias springs 61 permit the carriage second section as previously mentioned to compensate for the vertical movement of the crosspiece due to weight changes of the load carried on the bed of the vehicle during the loading and unloading operations.

As aforementioned, the hooklike member 35, when in the inoperative mode, is concealed between the plate members 27, 28. In addition the jaw unit 40 and its various components and the lift member 38, when in its retracted position, are also concealed between the plate members regardless whether member 35 is in its operative or inoperative mode. Thus, by being concealed between the plate members, the susceptibility of the unit 20 being damaged by a moving vehicle has been significantly reduced. Furthermore, by reason of such a structural arrangement, the improved locking device can have greater compactness without sacrificing the overall strength and stability of the device.

Thus, it will be noted that a releasable locking device has been disclosed which is compact; easily installed on the front wall of a loading dock; and does not rely on any electrical, hydraulic and/or pneumatic power sources to effect operation of the device. The device is not adversely affected by severe climatic conditions and is capable of accommodating vehicle ICC bars which vary in size and location over a wide range.

**Claims**

1. A releasable locking device for securing a parked vehicle to an adjacent structure (W), said device comprising a carriage having a first section (21) adapted to be fixed to the adjacent structure (W), and a second section (22) mounted on said first section and biased (61) to assume a predetermined elevated position, said second section (22) being movable downwardly from said elevated position upon an external force of a predetermined magnitude being exerted on said second section (22); a first means (35) mounted on said carriage second section (22) for relative rectilinear movement with respect thereto between an operative vehicle-locking mode (I) and in inoperative vehicle-release mode (II); releasable second means (40) mounted on the carriage second section (22) and coacting therewith and said first means (35) for retaining the latter in said operative mode (I); third means (37) carried on and movable independently of said carriage second section (22) between extended and retracted positions, when moving from a retracted position to an extended position said third means (37) effecting relative movement of said first means (35) from said inoperative mode (II) to said operative mode (I); and manually actuated fourth means (55) adjustably mounted on said carriage second section (22) and engageable with said second means (40) to effect movement of the latter to a non-retaining position with respect to said first means (35), when said fourth means (55) is manually actuated in one relative direction, characterised by the fact that a manually actuated fifth means (38) is carried on and movable independently of said carriage second section (22) and said first means (35) between extended and retracted positions for effecting relative movement of said first means (35) from said inoperative mode (II) to said operative mode (I) only after said fifth means (38) has moved a predetermined amount in one direction independently of said carriage second section (22) and said first means (35); and said releasable second means (40) and said manually actuated fifth means (38) — the latter only when moved into its retracted position — are concealed within said carriage second section (22) to be protected against damage by a moving vehicle.

2. The releasable locking device of claim 1 wherein the second means (40) is spring biased (40d) to effect automatic retaining of the first means (35) in the operative mode (I).

3. The releasable locking device of claim 2 wherein the second means (40) includes a first lock component (41) fixedly mounted on and substantially concealed by the carriage second section (22) and a spring biased second complemental lock component (403) carried on said first means (35) and being substantially concealed by said carriage second section (22), said lock components normally being in interlocking relation when said first means (35) is in said operative mode (I).

4. The releasable locking device of claim 1 wherein the fourth and fifth means (55, 38) are each provided with an exposed attachment element (56, 38a) for selective engagement by a manually manipulated implement (42) to impart an upward pulling force thereto.

5. The releasable locking device of claim 4 wherein the fifth means (38) normally assumes a retracted position relative to the carriage second section (22) and assumes an extended position when effecting movement of said first means (35) from an inoperative mode to an operative mode, the attachment element (38a) of said fifth means (38) being exposed when the latter is in either the retracted or extended position.

6. The releasable locking device of claim 5 wherein the attachment element (38a) is adapted to be selectively engaged and disengaged by one end of an elongated rodlike implement (42).

7. The releasable locking device of claim 5 wherein the fifth means (38) includes a pair of elongated depending members (38b, 38c) arranged in spaced substantially parallel relation and having upper end portions thereof interconnected (38d) and provided with the attachment element (38a), said fifth means (38) being disposed in a sliding straddling relation with a portion of said first means (35), said elongated members (38b, 38c) having lower end portions (E) in force-transmitting relation with said first means (35) upon said fifth means assuming a predetermined extended position with respect to said carriage second section (22).

## Patentansprüche

1. Lösbare Verriegelungsvorrichtung zum Sichern eines geparkten Fahrzeugs an einer benachbarten Struktur (W), wobei diese Vorrichtung umfaß: einen Wagen, welcher einen ersten Abschnitt (21) aufweist, der an der benachbarten Struktur (W) festlegbar ist, und einen zweiten Abschnitt 22), der an dem ersten Abschnitt montiert und derart vorgespannt ist (61), daß er eine vorgegebene angehobene Position einnimmt, wobei der zweite Abschnitt (22) aus der angehobenen Position nach unten bewegbar ist, wenn eine äußere Kraft von einer vorgegebenen Größe auf diesen zweiten Abschnitt (22) ausgeübt wird; erste Einrichtungen (35), die an dem zweiten Wagenabschnitt (22) für eine geradlinige Relativbewegung bezüglich desselben zwischen einem aktiven Fahrzeugverriegelungsmodus (I) und einem inaktiven Fahrzeugfreigabemodus (II) montiert sind; lösbare zweite Einrichtungen (40), die an dem zweiten Wagenabschnitt (22) montiert sind und mit diesem und den genannten ersten Einrichtungen (35) zusammenwirken, um letztere in dem aktiven Modus (I) zu halten; dritte Einrichtungen (37), die von dem zweiten Wagenabschnitt (22) getragen werden und unabhängig von diesem zwischen einer ausgefahrenen und einer zurückgezogenen Position bewegbar sind, wobei diese dritten Einrichtungen (37), wenn sie sich von einer zurückgezogenen Position in eine ausgefahrene Position bewegen, eine Relativbewegung der ersten Einrichtungen (35) aus dem inaktiven Modus (II) in den aktiven Modus (I) bewirken; und von Hand betätigte, vierte Einrichtungen (55), die einstellbar an dem zweiten Wagenabschnitt (22) montiert und mit den zweiten Einrichtungen (40) in Eingriff bringbar sind, um eine Bewegung der letzteren in eine Nicht-Halteposition bezüglich der ersten Einrichtungen (35) zu bewirken, wenn die vierten Einrichtungen (55) von Hand in einer relativen Richtung betätigt werden, dadurch gekennzeichnet, daß eine von Hand betätigbare, fünfte Einrichtung (38) von dem zweiten Wagenabschnitt (22) getragen wird und unabhängig von diesem und den ersten Einrichtungen (35) zwischen einer ausgefahrenen Position und einer zurückgezogenen Position beweglich ist, um eine Relativbewegung der ersten Einrichtungen (35) aus dem inaktiven Modus (II) in den aktiven Modus (I) erst zu bewirken, nachdem die fünfte Einrichtung (38) sich unabhängig von dem zweiten Wagenabschnitt (22) und den ersten Einrichtungen (35) um einen vorgegebenen Betrag in einer Richtung bewegt hat; und daß die lösbaren zweiten Einrichtungen (40) und die von Hand betätigbare, fünfte Einrichtung (38) — letztere nur, wenn sie in ihre zurückgezogene Position bewegt ist — in dem zweiten Wagenabschnitt (22) verborgen sind, um gegen eine Beschädigung durch ein sich bewegendes Fahrzeug geschützt zu sein.

2. Lösbare Verriegelungsvorrichtung nach Anspruch 1, bei der die zweiten Einrichtungen (40) federnd vorgespannt sind (40d), um ein automatisches Sichern der ersten Einrichtungen (35) in dem aktiven Modus (I) zu bewirken.

3. Lösbare Verriegelungsvorrichtung nach Anspruch 2, bei der die zweiten Einrichtungen (40) eine erste Verriegelungskomponente (41) umfassen, welche fest an dem zweiten Wagenabschnitt (22) montiert und durch diesen im wesentlichen verborgen ist, sowie eine zweite, federnd vorgespannte, komplementäre Verriegelungskomponente (403), die von den ersten Einrichtungen (35) getragen wird, und durch den zweiten Wagenabschnitt (22) im wesentlichen verborgen wird, wobei die Verriegelungskomponenten normalerweise miteinander verriegelt sind, wenn sich die ersten Einrichtungen (35) in dem aktiven Modus (I) befinden.

4. Lösbare Verriegelungsvorrichtung nach Anspruch 1, bei der die vierten und fünften Einrichtungen (55, 38) jeweils mit einem frei zugänglichen Befestigungselement (56, 38a) zum selektiven Erfassen durch ein von Hand betätigtes Gerät (42) zum Ausüben einer nach oben gerichteten Zugkraft auf dieselben versehen sind.

5. Lösbare Verriegelungsvorrichtung nach Anspruch 4, bei der die fünfte Einrichtung (38) normalerweise eine zurückgezogene Position bezüglich des zweiten Wagenabschnitts (22) einnimmt, und eine ausgefahrene Position einnimmt, wenn sie eine Bewegung der ersten Einrichtungen (35) von einem inaktiven Modus in einen aktiven Modus bewirkt, wobei das Befestigungselement (38a) der fünften Einrichtung (38) frei zugänglich ist, wenn letztere sich entweder in der zurückgezogenen oder in der ausgefahrenen Position befindet.

6. Lösbare Verriegelungsvorrichtung nach Anspruch 5, bei der das Befestigungselement (38a) selektiv von einem Ende eines länglichen, stangenförmigen Geräts (42) erfaßt und freigegeben werden kann.

7. Lösbare Verriegelungsvorrichtung nach Anspruch 5, bei der die fünfte Einrichtung (38) ein Paar von länglichen, herabhängenden Elementen (38b, 38c) umfaßt, die im Abstand voneinander und im wesentlichen parallel zueinander angeordnet sind und obere Endbereiche besitzen, welche verbunden (38d) und mit dem Befestigungselement (38a) versehen sind, wobei die fünfte Einrichtung (38) einen Teil der ersten Einrichtungen (35) gleitverschieblich übergreift, und wobei die länglichen Elemente (38b, 38c) untere Endbereiche (E) besitzen, welche in Antriebsverbindung mit den ersten Einrichtungen (35) stehen, wenn die fünfte Einrichtung eine vorgegebene, ausgefahrene Position bezüglich des zweiten Wagenabschnitts (22) einnimmt.

## Revendications

1. Dispositif d'accrochage déverrouillable pour assujettir un véhicule garé à une structure adjacente (W), ledit dispositif comprenant un guidage ayant une première partie (21) conçue pour êre fixée à la structure adjacente (W) et une seconde partie (22) montée sur la première partie et rappelée (61) pour prendre une position haute prédéterminée, ladite seconde partie (22) pouvant être déplacée vers le bas à partir de ladite position haute sous l'application d'une force extérieure d'amplitude prédéterminée sur ladite seconde partie (22); un premier moyen (35) monté sur ladite seconde partie (22) du guidage de manière à exécuter un mouvement rectiligne relatif par rapport à elle entre un mode actif (I) d'accrochage de véhicule et un mode inactif (II) de libération de véhicule; un deuxième moyen déverrouillable (40) monté sur la seconde partie (22) de guidage et coopérant avec elle et avec ledit premier moyen (35) pour retenir ce dernier dans ledit mode actif (I); un troisième moyen (37) porté par la seconde partie (22) du guidage et pouvant se déplacer indépendamment par rapport à elle entre des positions d'extension et de retrait, ledit troisième moyen (37), lorsqu'il passe d'une position de retrait à une position d'extension, provoquant un mouvement relatif dudit premier moyen (35) dudit mode inactif (II) vers ledit mode actif (I); et un quatrième moyen (55) actionné manuellement, monté de façon réglable sur ladite seconde partie (22) de guidage et pouvant s'enclencher avec ledit deuxième moyen (40) pour provoquer un mouvement de ce dernier vers une position de non retenue par rapport audit premier moyen (35), lorsque ledit quatrième moyen (55) est actionné manuellement dans un premier sens relatif, caractérisé par le fait qu'un cinquième moyen (38) actionné manuellement est porté par, et peut être déplacé indépendamment de, ladite seconde partie (22) de guidage et dudit premier moyen (35) entre des positions d'extension et de retenue pour provoquer un mouvement relatif dudit premier moyen (35) dudit mode inactif (II) vers ledit mode actif (I) uniquement après que ledit cinquième moyen (38) s'est déplacé d'une distance prédéterminée dans un premier sens indépendamment de ladite seconde partie (22) de guidage et dudit premier moyen (35); et en e que ledit deuxième moyen déverrouillable (40) et ledit cinquième moyen (38) pouvant être actionné manuellement — ce dernier uniquement lorsqu'il est amené dans sa position de retrait — sont masqués à l'intérieur de ladite seconde partie (22) de guidage afin d'être protégés d'une détérioration par un véhicule en mouvement.

2. Dispositif d'accrochage déverrouillable selon la revendication 1, dans lequel le deuxième moyen (40) est rappelé par ressort (40d) pour retenir automatiquement le premier moyen (35) dans le mode actif (I).

3. Dispositif d'accrochage déverrouillable selon la revendication 2, dans lequel le deuxième moyen (40) comprend un premier élément (41) de verrouillage monté fixement sur, et sensiblement masqué par, la seconde partie (22) de guidage et un second élément complémentaire (403) de verrouillage, rappelé par ressort, porté par ledit premier moyen (35) et sensiblement masqué par ladite seconde partie (22) de guidage, lesdits éléments de verrouillage étant normalement accrochés l'un à l'autre lorsque ledit premier moyen (35) est dans ledit mode actif (I).

4. Dispositif d'accrochage déverrouillable selon la revendication 1, dans lequel les quatrième et cinquième moyens (55, 38) comprennent chacun un élément apparent (56, 38a) d'accrochage avec lequel on peut enclencher sélctivement un instrument (42) manipulé manuellement pour lui appliquer une force de traction vers le haut.

5. Dispositif d'accrochage déverrouillable selon la revendication 4, dans lequel le cinquième moyen (38) prend normalement une position de retrait par rapport à la seconde partie (22) de guidage et prend une position d'extension lorsque l'on déplace ledit premier moyen (35) d'un mode inactif vers un mode actif, l'élément d'accrochage (38a) dudit cinquième moyen (38) étant à découvert lorsque ce dernier est soit dans la position de retrait, soit dans la position d'extension.

6. Dispositif d'accrochage déverrouillable selon la revendication 5, dans lequel l'élément d'accrochage (38a) est conçu pour qu'une extrémité d'un instrument allongé (42), analogue à une tringle, puisse sélectivement être enclenchée avec lui et en être dégagée.

7. Dispositif d'accrochage déverrouillable selon la revendication 5, dans lequel le cinquième moyen (38) comprend deux éléments allongés descendants (38b, 38c) agencés dans une disposition sensiblement parallèle et écartée et comportant des parties extrêmes supérieures reliées entre elles (38d) et équipées de l'élément d'accrochage (38a), ledit cinquième moyen (38) étant placé dans une disposition de chevauchement coulissant avec une partie dudit premier moyen (35), lesdits éléments allongés (38b, 38c) comportant des parties extrêmes inférieures (E) en liaison de transmission de force avec ledit premier moyen (35) après que ledit cinquième moyen a pris une position prédéterminée d'extension par rapport à ladite seconde partie (22) de guidage.

0 139 038

FIG. 1

FIG. 2

FIG. 3

FIG. 4

1

FIG. 5

FIG. 6

FIG. 7

FIG. 8

FIG. 9

FIG. 10